# EUROPEAN PATENT APPLICATION

(11) **EP 1 607 868 A1**
(43) Date of publication of application: **21.12.2005**
(21) Application number: 04716313.4
(22) Date of filing: 02.03.2004
(51) Int. Cl.: G06F 12/00

(54) **DATA PROCESSING DEVICE, DATA PROCESSING PROGRAM, AND RECORDING MEDIUM**

(30) Priority: 10.03.2003 JP 2003063473
(71) Applicant: SHARP KABUSHIKI KAISHA, Osaka-shi, Osaka 545-8522 (JP)
(72) Inventor: SAWADA, Yuji, A-208, Kidera Haimu, Nara-shi, Nara 630-8303 (JP); MORIO, Tomokazu, Kitakatsuragi-gun, Nara 639-2101 (JP)
(74) Representative: Müller, Frithjof E.
(86) International application number: PCT/JP2004/002584
(87) International publication number: WO 2004/081794

(57) **Abstract**

A file block classification unit (15) discriminates that file information is classified to be stored in which block directory, on the basis of a file type discriminated by a file type discriminator (12) and a file reference value calculated by a file reference value calculation unit (14), and outputs a block number of the block directory discriminated as being suitable for storing the file information. A file information management unit (16) receives a file name from a file name acquisition unit (13), the file reference value from the file reference value calculation unit (14), the block number from the file block classification unit (15) and file size information from a file information input unit (11), and allows the suitable block directory to store file information of each file on the basis of these pieces of information.

## Description

### Technical Field

The present invention relates to a device for managing data, a program, and a recording medium. In particular, the present invention relates to a data processing device which is suitable for managing a large amount of files stored in a storage device, a program for data processing, and a recording medium.

### Background Art

Conventionally; there have been proposed various methods for managing and/or searching for a file stored in a storage device. Particularly, there is a method for managing a plurality of files in a form of a directory (folder). In the case where a plurality of pieces of file information (information which is about a file, includes a file name, a file storage place and the like and is created for each file) are unsystematically stored in a directory, if the number of file information to be stored becomes large, there arises a problem that it takes much time to search for file information. The reason therefor is as follows: upon searching for file information, a plurality of pieces of file information stored in a directory are searched sequentially from a beginning of the plurality of pieces of file information. In this specification, file data is simply referred to as file, and information for managing file data is referred to as file information.

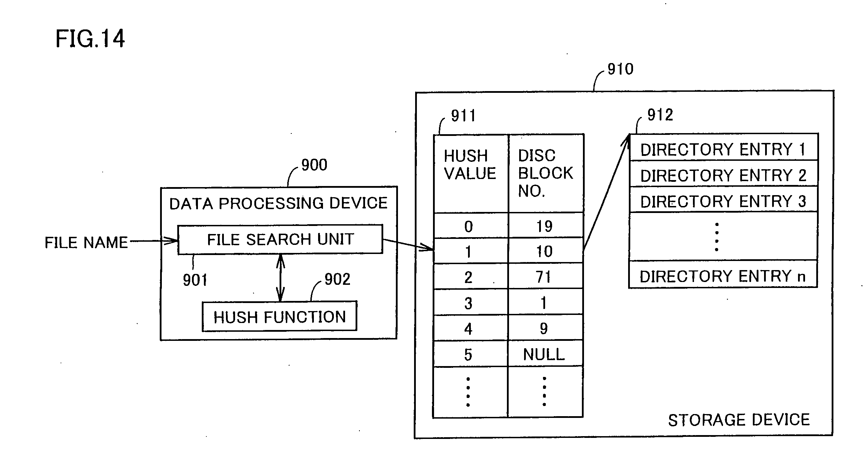

In order to solve such a problem, there has been conventionally proposed a technique disclosed in Japanese Laid-Open Patent Publication No. 2000-357115. The technique disclosed in the publication will be described with reference to Fig. 14.

In the technique disclosed in the aforementioned publication, file information is stored in a directory block 912 of a storage device 910. More specifically, directory block 912 is divided into a plurality of directory entries, and file information in each file is stored in any of the plurality of directory entries. A region 911 in storage device 910 stores a hush table which associates a hush value of a file name with a stored directory entry (disc block number) as for the file information. Upon searching for the file information in storage device 910, a data processing device 900 calculates a hush value of a file name of file information to be searched, on the basis of a hush function stored in a region 902, searches for a directory entry (disc block number) corresponding to the hush value in region 911, and searches for file information only in the corresponding directory block.

In the aforementioned conventional technique, however, if the number of file information each having the same hush value is large, a large number of file information are intensively stored in the same directory block. In addition, there have been taken no countermeasures to prevent this drawback. For this reason, even when a single directory block is regarded as a subject to be searched upon searching for file information, sufficient reduction in search time cannot be achieved in some cases.

### Disclosure of the Invention

The present invention has been devised in view of the aforementioned circumstances, and it is an object of the present invention to provide a data processing device, a program for data processing, and a recording medium, which can securely shorten a time for accessing or searching for a file in a storage device even in the case where the storage device stores a large amount of files.

A data processing device according to one aspect of the present invention includes: a file information creation unit to create file information which is information regarding each file stored in a storage device, in correspondence with each file; a discrimination unit to discriminate a type of the file stored in the storage device; a calculation unit to calculate a file reference value which is a value uniquely determined by a file name stored in the storage device; a file information storage unit to include a plurality of storage regions for storing the file information; and a classification information creation unit to create region classification information which is information for classifying that each file information has to be stored in which storage region from among the plurality of storage regions in the file information storage unit, in accordance with the type of the file and the file reference value. Herein, the file information storage unit stores the file information with the classification according to the region classification information.

In the data processing device according to one aspect of the present invention, preferably, the classification information creation unit classifies the storage region to be stored into different storage regions in accordance with the file reference value corresponding to each file information in such a manner that the number of file information stored in one of the plurality of storage regions is a predetermined number or less.

In the data processing device according to one aspect of the present invention, preferably, the classification information creation unit classifies the storage region to be stored into different storage regions in accordance with a range of the file reference value corresponding to each file information.

A data processing device according to another aspect of the present invention includes: a file information storage unit to record file information which is information regarding files stored on a storage device in a region corresponding to a type of each file and a file reference value which is a value uniquely determined from a file name; a classification information storage unit to store region classification information for classifying a region where the file information has to be stored in the file information storage unit, in accordance with the file type and the file reference value; a file information creation unit to create the file information about the file to be accessed; a first discrimination unit to discriminate a file type of the file to be accessed; a calculation unit to calculate the file reference value of the file to be accessed; and a second discrimination unit to refer to the region classification information on the basis of the file type and the file reference value of the file to be accessed, thereby discriminating a region, where the file information of the file is stored, in the file storage unit.

In the data processing device according to another aspect of the present invention, preferably, the file information storage unit includes a plurality of storage regions, and records the file information on a storage region, which corresponds to a type of the file and a file reference value which is a value uniquely determined from a file name, among the plurality of storage regions, in the region classification information, it is classified that the file information is stored in which storage region among the plurality of storage regions in the file information storage unit, in accordance with the file type and the file reference value, and the second discrimination unit refers to the region classification information on the basis of the file type and the file reference value of the file to be accessed, thereby discriminating a storage region which stores file information about the file to be accessed, in the file storage unit.

In the data processing device according to the present invention, preferably, the file type is discriminated on the basis of an extension included in the file name of the file.

In the data processing device according to the present invention, preferably, the file reference value is calculated using a hush function.

In the data processing device according to the present invention, preferably, the file information includes information about a storage place of the corresponding file, and the file information storage unit stores the file in an order corresponding to an order of storing the file information, and stores only a place where a beginning of the file is stored as the information about the storage place of the file.

In the data processing device according to the present invention, preferably, the file information storage unit compresses the file to store the compressed file.

In the data processing device according to the present invention, preferably, the file information storage unit encrypts the file to store the encrypted file.

In the data processing device according to the present invention, preferably, the file, the file information and the region classification information are coupled to each other and stored as one file in the storage region.

A program for data processing according to still another aspect of the present invention allows a file information storage unit including a plurality of storage regions to store file information which is information regarding each file stored in a storage device. The program for data processing allows a computer to execute the steps of: discriminating a type of the file stored in the storage device; calculating a file reference value which is a value uniquely determined from a file name stored in the storage device; creating region classification information for classifying a storage region, where the file information has to be stored, among the plurality of storage regions in the file information storage unit, in accordance with the file type and the file reference value; and storing the file information in the storage region according to the region classification information.

In the program for data processing according to still another aspect of the present invention, preferably, in the step of creating the region classification information, the computer is allowed to create the region classification information in such a manner that the number of file information stored in each of the plurality of storage regions is a predetermined number or less.

A program for data processing according to yet another aspect of the present invention searches, in order to access each file stored in a storage device, in a file information storage unit recording file information which is information regarding the file in a region corresponding to a type of the file and a file reference value which is a value uniquely determined from a file name. The program for data processing allows a computer to execute the steps of: storing region classification information for classifying a region where the file information has to be stored in the file information storage unit, in accordance with the file type and the file reference value; creating the file information about a file to be accessed; discriminating a file type of the file to be accessed; calculating a file reference value of the file to be accessed; and referring to the region classification information on the basis of the file type and the file reference value of the file to be accessed, thereby discriminating a region, where the file information of the file is stored, in the file storage information unit.

Moreover, the file information storage unit includes a plurality of storage regions, and records the file information on a storage region, corresponding to a type of the file and a file reference value which is a value uniquely determined from the file name, among the plurality of storage regions, and in the region classification information, it is classified that the file information is stored which storage region among the plurality of storage regions in the file information storage unit, in accordance with the file type and the file reference value. In the program for data processing according to yet another aspect of the present invention, preferably, in the step of discriminating a region in the file storage unit, the computer is allowed to refer to the region classification information on the basis of the file type and the file reference value of the file to be accessed, thereby discriminating a storage region, where the file information of the file to be accessed is stored, in the file storage unit.

A recoding medium according to the present invention records the aforementioned program for data processing.

According to the present invention, file information is classified in accordance with a file type and a file reference value which is uniquely determined from a file name in a file information storage unit, and is stored in a storage region. Consequently, the file information is stored in different storage regions on the basis of the file type even in the case where the number of file information which are equal in file reference value uniquely determined from the file name, e.g., a hush value, is large. It is therefore possible to securely avoid that a large amount of file information are intensively stored. Accordingly, when file information is searched upon accessing or searching for a file, the number of file information included in a storage region to be searched is reduced, so that a time for searching for file information can be shortened. Further, since file information can be managed for each file type, a file can be managed in accordance with a file type.

According to the present invention, upon searching for file information in the file information storage unit in order to access or search for a file, it is sufficient that the search operation may be performed only on a region classified in accordance with a file type and a file reference value which is uniquely determined from a file name. Consequently, a subject to be searched is can be narrowed on the basis of the file type and the file reference value which is uniquely determined from the file name, so that a search time can be securely shortened.

### Brief Description of the Drawings

Fig. 1 illustrates a configuration of a portion, which relates to the present invention, of a data processing device according to a first embodiment of the present invention.
Fig. 2 is a flowchart of a process executed upon creating file management information in the data processing device illustrated in Fig. 1.
Fig. 3 schematically illustrates the file management information created in the process illustrated in Fig. 2.
Fig. 4 schematically illustrates storage contents of a block directory of block No. 1 in the data processing device illustrated in Fig. 1.
Fig. 5 schematically illustrates storage contents of a block directory of block No. 2 in the data processing device illustrated in Fig. 1.
Fig. 6 schematically illustrates a storage mode of a file in a storage device in accordance with the block directories illustrated in Figs. 4 and 5.
Fig. 7 illustrates a modification of the file storage mode illustrated in Fig. 6.
Fig. 8 illustrates a block directory corresponding to the file storage mode illustrated in Fig. 7.
Fig. 9 illustrates a block directory corresponding to the file storage mode illustrated in Fig. 7.
Fig. 10 schematically illustrates a state where a file to be stored in a storage region is stored together with block management information and a block directory in a file information management unit of the data processing device illustrated in Fig. 1.
Fig. 11 illustrates a configuration of a portion, which relates to the present invention, of a data processing device according to a second embodiment of the present invention.
Fig. 12 is a flowchart which illustrates a process executed by the data processing device illustrated in Fig. 11 and for accessing a file stored in a storage device connected to the data processing device.
Fig. 13 illustrates a configuration of a data processing device according to a third embodiment of the present invention.
Fig. 14 illustrates a method for managing a plurality of files in a form of a directory, which is a conventional technique relating to the present invention.

### Best Modes for Carrying Out the Invention

Hereinafter, embodiments of the present invention will be described with reference to the drawings.

### (First Embodiment)

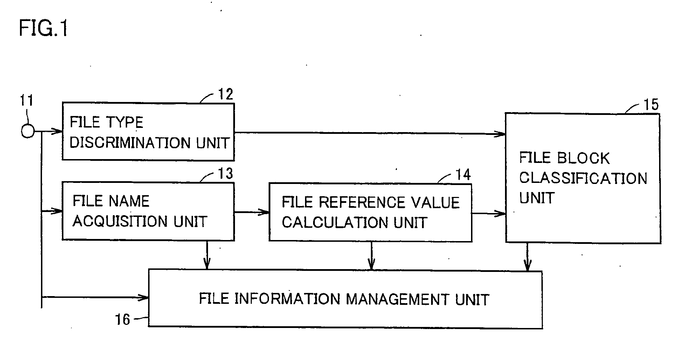

With reference to Fig. 1, first, a data processing device illustrated in Fig. 1 includes a file information input unit 11 connected to a storage device (not shown) which stores a plurality of files, a file type discrimination unit 12, a file name acquisition unit 13, a file reference value calculation unit 14, a file block classification unit 15, and a file information management unit 16.

The data processing device receives information such as a file type, a file name and a file size from the storage device through file information input unit 11. Herein, examples of the file type may include a program, a text document, a still image, a motion picture and audio data. In this case, the file type may be discriminated from among information in a file. In the case where a file name includes a file type, the file type may be discriminated using an extension such as "html", "xml", "jpeg", "png", "dat", "doc", "wav" or "exe" included in the file name.

File type discrimination unit 12 discriminates a file type to output a discrimination result. File name acquisition unit 13 acquires and outputs a file name. File reference value calculation unit 14 receives the file name output from file name acquisition unit 13, and outputs a file reference value which is uniquely calculated from the file name. The file reference value is a value which is calculated using a function uniquely calculated from the file name. For example, a hush function may be used for the calculation of the file reference value.

The aforementioned storage device has a storage region divided into a plurality of blocks, and stores a plurality of files in any of the plurality of blocks. File information management unit 16 stores a plurality of block directories (first block directory, second block directory and the like) for storing information about each file, and block management information indicative of the kind of file information stored in each block directory. Each of the plurality of block directories is specified by a block number.

File block classification unit 15 discriminates that file information is classified to be stored in which block directory, on the basis of the file type and the file reference value, and outputs a block number corresponding to the block directory discriminated as being suitable for storing the file information. File information management unit 16 receives the file name from file name acquisition unit 13, the file reference value from file reference value calculation unit 14, the block number from file block classification unit 15, and information about a file size from file information input unit 11, respectively. Then, file information management unit 16 stores file information of each file in the suitable block directory on the basis of the received information.

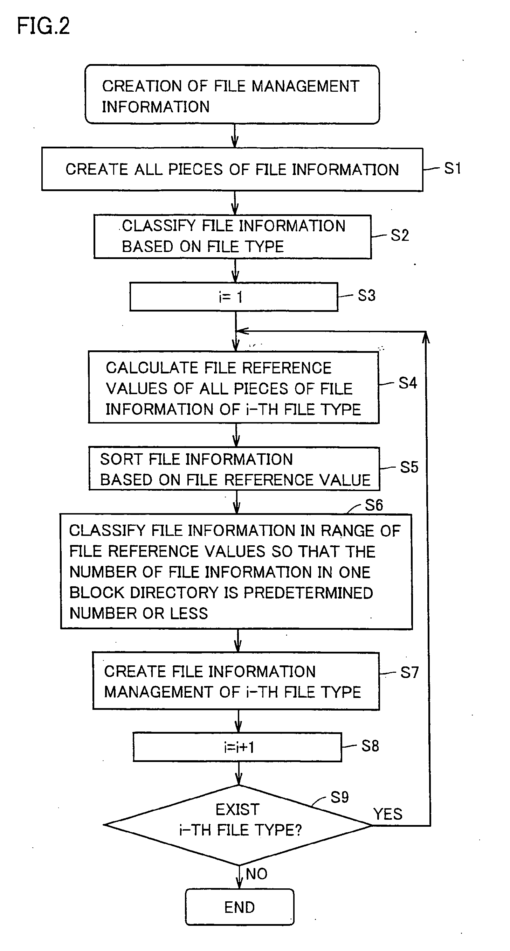

Next, a process executed upon creating file management information in the data processing device illustrated in Fig. 1 will be described with reference to Fig. 2.

In step S1 (hereinafter, the term "step" will be omitted), first, file information input unit 11 accepts input of information about all files to be managed, and creates file information about the all files.

In S2, next, file type discrimination unit 12 discriminates the type of a file corresponding to each file information created by file information input unit 11, and classifies the created all pieces of file information according to their types.

In S3, next, file information management unit 16 designates, as "1", a count value for a type counter i for performing a process for each file type. Thereby, a first type is designated as a type to be processed in S4 and subsequent steps.

In S4, next, file reference values are calculated for all pieces of file information of the i-th file type designated by file information management unit 16.

In S5, next, file information management unit 16 sorts the all pieces of file information of the i-th file type according to their file reference values.

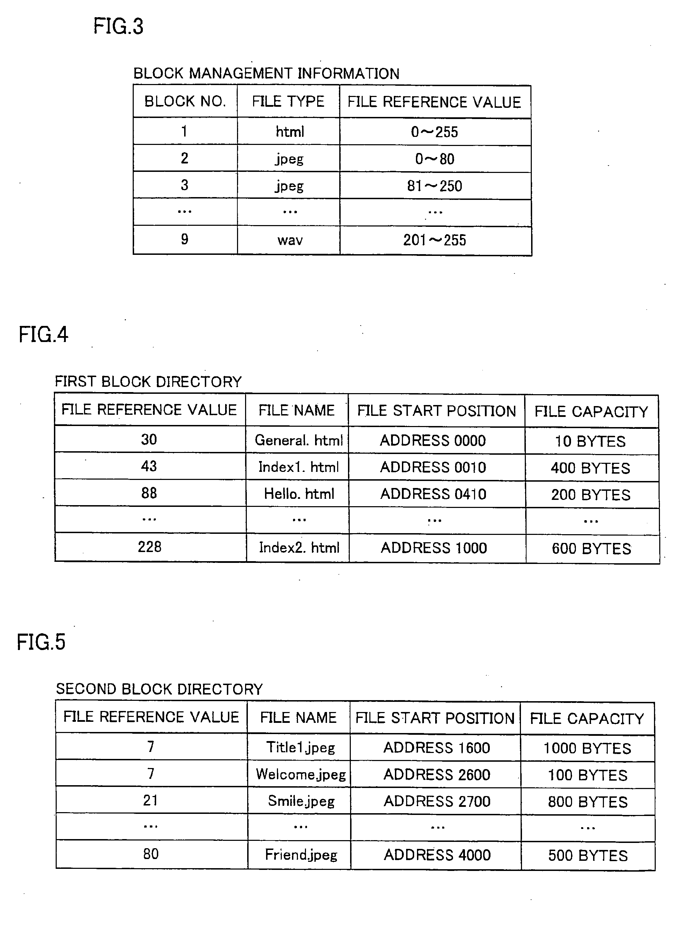

In S6, next, file block classification unit 15 finally determines a block directory in which file information is stored within a range of the file reference values, in such a manner that the number of file information to be stored in one block directory is a predetermined number or less. In other words, in the process executed in S6, in the case where if the all pieces of file information of the i-th file type are stored in one block directory, a predetermined number or more of file information are stored in the block directory, a range of the file reference values of the file to be stored in the same block directory is appropriately specified, so that the number of file information stored in one block directory is limited to the predetermined number or less. Fig. 3 illustrates, as block management information, "the range of the file reference values of the file to be stored in the same block directory" defined herein. It is to be noted that the block management information is stored in file information management unit 16.

In the block management information illustrated in Fig. 3, different block numbers are given to respective block directories. In the block management information, a file type of file information to be stored and a range of file reference values of a file corresponding to the file information are indicated in each block directory. For example, a block directory of block No. 1 stores file information which is of a file type having an extension "html" and has a file reference value in a range from 0 to 255.

Similarly, a block directory of block No. 2 stores file information which is of a file type having an extension "jpeg" and has a file reference value in a range from 0 to 80. A block directory of block No. 3 stores file information which is of a file type having an extension "jpeg" and has a file reference value in a range from 81 to 250.

In this embodiment, in the case where all file information of a file type having the extension "jpeg" are stored in the same block directory (block directory α), the block directory α stores file information exceeding the aforementioned predetermined number. According to the process in S6 in this embodiment, even the file information of the file type having the same extension "jpeg" are stored in different block directories according to their file reference values. More specifically, in the process in S6, a range of file reference values stored in one block directory is set for each file type, if necessary, in such a manner that the number of file information stored in one block directory becomes the predetermined number or less.

In S7, next, file information management unit 16 saves, in a suitable block directory, all pieces of file information of the file types to be currently processed, in accordance with the block management information illustrated in Fig. 3.

In S8, next, file information management unit 16 updates the count value i of the type counter by incrementing the count value i by "1".

In S9, then, file information management unit 16 checks whether or not the i-th file type exists. If it is determined that the i-th file type exists, the process returns to S4. On the other hand, if the file management information have been created for the all file types and have been saved in the block directory and, at this time, it is determined that no i-th file type exists, the process is finished.

In this embodiment, information about an extension included in a file name is used as the file type and a hush value having a value in a range from 0 to 255 is used as the file reference value; however, the present invention is not particularly limited thereto. A file type can be determined and a range of a hush value can be further widened by another method. Moreover, it is preferred that an upper limit of the number of file information stored in one directory is appropriately set in accordance with a processability regarding a search of a search processing device which searches for a file using the block management information illustrated in Fig. 3. As the upper limit of the number of file information to be stored is large, a maximum processing time relating to a search process becomes longer. Therefore, if the processability of the search processing device is low, the upper limit of the number of file information to be stored is preferably set to be small.

Fig. 4 schematically illustrates contents stored in the block directory of block No. 1 in this embodiment.

A file reference value, a file name, a file start position and a file capacity for each file information, that are associated with each other, are stored in the block directory. The file start position is information indicative of a place (address) in which a beginning of a file is stored in the storage device.

The block directory illustrated in Fig. 4 is of block No. 1. Consequently, as will be understood from Fig. 3, this block directory stores only file information having an extension "html" and a file reference value in a range from 0 to 255.

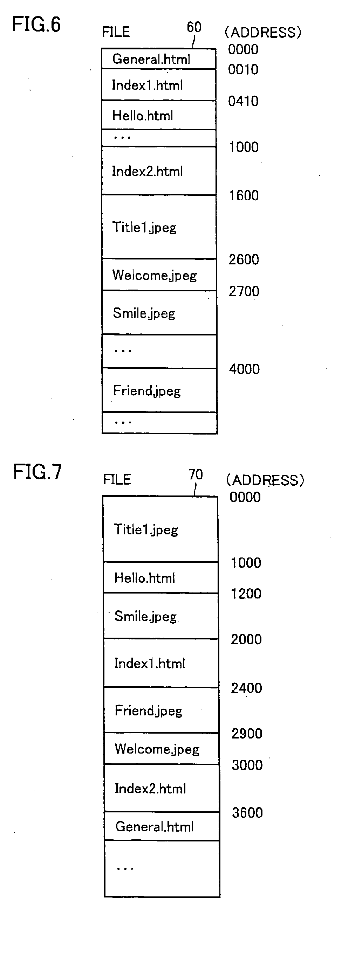

Fig. 5 schematically illustrates contents stored in a block directory of block No. 2.

Similar to the contents illustrated in Fig. 4, a file reference value, a file name, a file start position and a file capacity for each file information, that are associated with each other, are stored in the block directory illustrated in Fig. 5.

As will be understood from Fig. 3, the block directory illustrated in Fig. 5 stores only file information having an extension "jpeg" and a file reference value in a range from 0 to 80.

Further, in the block directory illustrated in Fig. 5, file information about a file name "Title1.jpeg" and file information about a file name "Welcome.jpeg" have their file reference values of "7". As described above, the same reference value is calculated for different file names in some cases.

Fig. 6 schematically illustrates a storage mode of a file in the storage device connected to a disc processing device in this embodiment. In Fig. 6, a position where a file name is described corresponds to a position where a file corresponding to the file name is stored. The file of the file name described in the first block directory illustrated in Fig. 4 and the file of the file name described in the second directory illustrated in Fig. 5 are stored in a storage region 60 of the storage device illustrated in Fig. 6. A numeric value such as "0000" or "0011" described in a right end of storage region 60 denotes an address indicative of an storage place in storage region 60.

Concretely, in storage region 60, a beginning of a file having a file name "General.html" is positioned at an address "0000", a beginning of a file having a file name "Index1.htm1" is positioned at an address "0010", a beginning of a file having a file name "Hello.htm1" is positioned at an address "0410", and a beginning of a file having a file name "Index2.html" is positioned at an address "1000". Moreover, a beginning of a file having a file name "Titlel.jpeg" is positioned at an address "1600", a beginning of a file having a file name "Welcome.jpeg" is positioned at an address "2600", a beginning of a file having a file name "Smile.jpeg" is positioned at an address "2700", and a beginning of a file having a file name "Friend.jpeg" is positioned at an address "4000".

In the aforementioned embodiment, a file information storage unit is constituted by file information management unit 16. A plurality of storage regions of the file information storage unit are constituted by the plurality of block directories of file information management unit 16. In addition, region classification information is constituted by the block management information.

In the aforementioned embodiment, a file management is performed such that a plurality of pieces of file information are stored in different block directories according to their file types. As described in the process in S6 (see Fig. 2), if the number of files (or file information) of a file type is larger than the predetermined number, the file information of the file type is divided into a plurality of pieces and, then, is stored in different block directories according to their file reference values. By storing the file information in such a division manner, it is possible to suppress the number of file information stored in one block directory to the predetermined number or less. Thus, a high speed search operation of file information is maintained. Moreover, as illustrated in Fig. 3, the range of the file reference values stored in each block directory is recorded as block management information, so that the number of block directories to be searched can be made smaller upon searching for a file. This point also contributes to a high speed search operation of file information in this embodiment.

Since the file information is managed for each file type in the aforementioned embodiment, it is possible to manage a file according to a file type. As for a file used in a device which operates while changing software having a large number of execution formats, for example, it is necessary to perform a high speed file access operation. According to this embodiment, such file information of a file type can be preferentially stored in a high-speed accessible block directory. In addition, file information which permits a long access time but has a considerably large size can be stored in a block directory having a relatively large size. Further, not only file information but also files themselves can be collectively saved in different storage regions in accordance with a file type.

The aforementioned embodiment describes the case where the file information of a file type having the extension "jpeg" is divided into two pieces which are then stored in two block directories. However, the number of block directories, in which file information of one file type is stored in a division manner, is not limited to two, and may be three or more.

In the aforementioned embodiment, according to information about the block directories illustrated in Figs. 4 and 5, files of the same type (files having the same identifier such as "html" or "jpeg") are consecutively stored in storage region 60 of the storage device as illustrated in Fig. 6.

When the file is stored in such a manner, a file capacity storing operation can be omitted in each block directory illustrated in Fig. 4 or 5. The reason therefor is as follows: a file capacity can be calculated from a difference between a file start position of a target file and a file start position of a subsequent file. In other words, if files of the same type are consecutively stored in storage region 60, the file start positions of the respective block directories correspond to the files consecutively stored in storage region 60. Consequently, the file capacity can be calculated from the file start position as described above, and a memory region for storing the file capacity can be reduced.

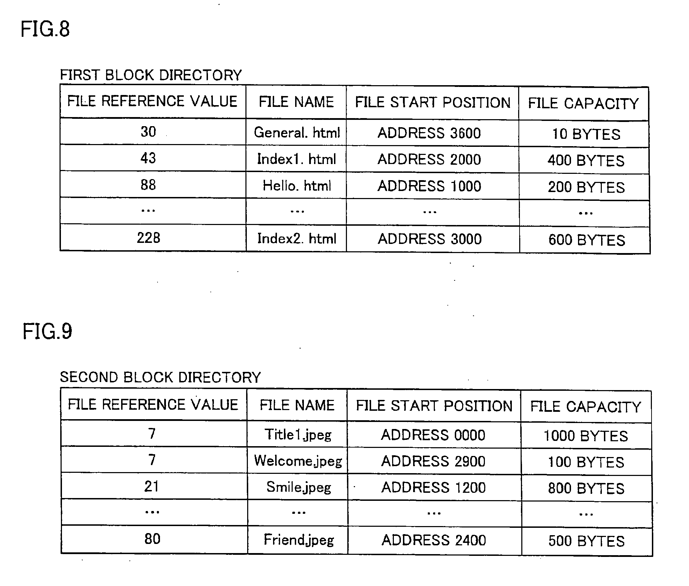

On the other hand, as illustrated in Fig. 7, the present invention can be applied to a case where files of the same type are stored at random in a storage region 70 of the storage device so as not to be consecutively stored. Figs. 8 and 9 illustrate block directories each corresponding to a file storage mode illustrated in Fig. 7. Each of the block directories illustrated in Figs. 8 and 9 is configured in such a manner that file information is stored in accordance with the same block management information as that illustrated in Fig. 3.

With reference to Figs. 7 to 9, in storage region 70, a beginning of a file having a file name "Titlel.jpeg" is positioned at an address "0000", a beginning of a file having a file name "Hello.html" is positioned at an address "1000", a beginning of a file having a file name "Smile.jpeg" is positioned at an address "1200", a beginning of a file having a file name "Index1.html" is positioned at an address "2000", a beginning of a file having a file name "Friend.jpeg" is positioned at an address "2400", a beginning of a file having a file name "Welcome.jpeg" is positioned at an address "2900", a beginning of a file having a file name "Index2.html" is positioned at an address "3000", and a beginning of a file having a file name "General.html" is positioned at an address "3600".

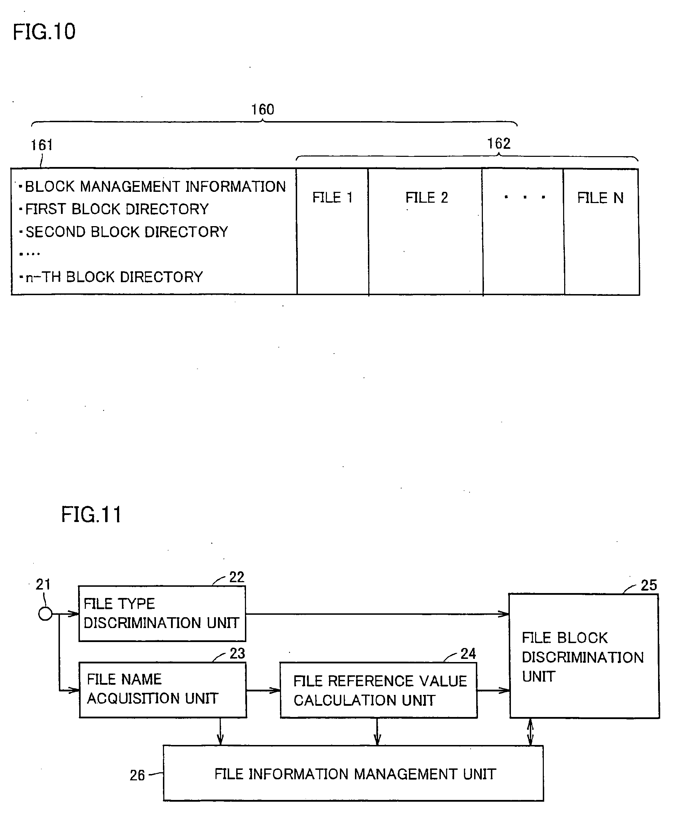

In this embodiment, a file to be stored in storage region 60 may be stored in file information management unit 16 together with block management information and a block directory. With this configuration, file information management unit 16 collectively stores information regarding file access, leading to easy handling of a file. Fig. 10 schematically illustrates a storage mode in file information management unit 16 in a state where information is stored in such a manner. With reference to Fig. 10, a storage region 160 of file information storage unit 16 includes a region 161 which stores block management information and a plurality of block directories, and a region 162 which stores a plurality of files described as a file 1, a file 2 and the like.

Also in the case of distributing contents constituted of a plurality of files such as an HTML (HyperText Markup Language) document and an electronic book to users in a form that the contents are archived in one file, a file and data regarding the file may be saved by the mode illustrated in Fig. 10, i.e., in such a manner that the plurality of files archived in one file, block management information thereof, and file information (block directories) thereof are coupled to each other for save as one file in a storage region like storage region 160, A processing device which executes processes such as reproduction on the contents saved as described above is configured in such a manner that a file is read on the basis of the information stored in region 161 illustrated in Fig. 10. Thus, it becomes possible to acquire a necessary file at a high speed while the contents are still archived.

In the case of storing a file in region 162, the file can be compressed for save.

In the case of storing a file in region 162, the file can be encrypted for save. An encryption process can be selected according to a file type, e.g., image data is encrypted by a watermarking process and license management information is encrypted by a more sophisticated encryption process.

### (Second Embodiment)

Fig. 11 illustrates a configuration of a portion, which relates to the present invention, of a data processing device according to a second embodiment of the present invention. In the first embodiment, the data processing device creates block management information and saves file information in a block directory. In this embodiment, description will be given of an operation of the data processing device for searching for file information by using the information created as described above.

The data processing device illustrated in Fig. 11 includes a file information input unit 21 which is connected to a storage device (not shown) for storing a plurality of files and creates file information, a file type discrimination unit 22, a file name acquisition unit 23, a file reference value calculation unit 24, a file block discrimination unit 25, and a file information management unit 26.

The data processing device illustrated in Fig. 11 receives information about a file type and a file name of a file to be accessed, from an external device through file information input unit 21. File type discrimination unit 22 discriminates a file type on the basis of the information received by file information input unit 21, and outputs a discrimination result to file block discrimination unit 25. File name acquisition unit 23 acquires a file name on the basis of the information received by file information input unit 21, and outputs the file name to file reference value calculation unit 24 and file information management unit 26. File reference value calculation unit 24 receives the file name output by the file name acquisition unit 23, and outputs a file reference value uniquely calculated from the file name to file block discrimination unit 25 and file information management unit 26.

File information management unit 26 stores block management information (see Fig. 3) like the same manner as file information management unit 16 in the first embodiment, and includes a plurality of block directories for storing file information. File block discrimination unit 25 refers to the file type, the file reference value, and the block management information stored in file information management unit 26, thereby discriminating a block directory in which the file information is classified, and outputs a result thereof as a block number to block information management unit 26.

A block number of a block directory in which file information is stored is determined by the respective processes of the aforementioned elements. Thus, block information management unit 26 searches in the block directory of the block number determined with the file reference value and the file name of the file to be accessed as conditions to acquire information required for access such as a file start position of the file to be accessed.

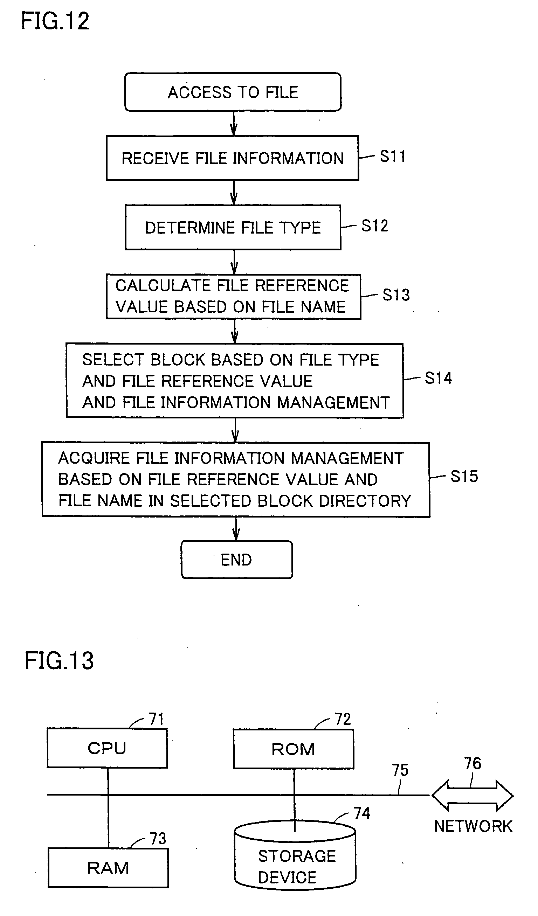

Next, a process for accessing the file stored in the aforementioned storage device will be described with reference to Fig. 12.

Upon start of access to the file stored in the storage device, in S11, first, file information input unit 21 accepts input of information about a file type and a file name of a file to be accessed.

In S12, next, file type discrimination unit 22 discriminates a file type on the basis of the information received by file information input unit 21. The discrimination of file type may be performed on the basis of an extension of the file name as described above, as long as the file type corresponds to contents of block management information in file information management unit 26.

In S 13, next, file reference value calculation unit 24 calculates a file reference value uniquely calculated from the file name, on the basis of the file output by file name acquisition unit 23. Herein, the file reference value is calculated by the same calculation method as that for a reference value used upon creating the block management information and the respective block directories in file information management unit 26. An example of the file reference value may include a hush value.

In S 14, next, file block discrimination unit 25 refers to the file type, the file reference value, and the block management information in file information management unit 26, thereby discriminating a block directory in which the file information is classified.

In S 15, next, block information management unit 26 searches in the block directory of the block number determined with the file reference value and the file name of the file to be accessed as conditions, and acquires information (file management information) required for access such as a file start position of the file to be accessed. Thus, the process is finished.

In the aforementioned embodiment, if file information is acquired upon accessing a file, a storage place of the file to be accessed can be acquired by searching for only one block directory on the basis of the file information and block management information. Herein, each block directory has the number of file information stored therein which is limited to a predetermined number or less. Thereby, a search time can be suppressed within a fixed time. In addition, since a file management can be performed in accordance with a file type, a file can be managed by appropriately selecting a file save region from the viewpoint of an accessing speed or a capacity according to the file type.

### (Third Embodiment)

The data processing devices in the aforementioned first and second embodiments can be configured by hardware illustrated in Fig. 13. More specifically, the data processing device in this case has a configuration in that a CPU (Central Processing Unit) 71, a ROM (Read Only Memory) 72, a RAM (Random Access Memory) 73 and a storage device 74 are connected to each other by a bus 75. Moreover, the data processing device can transmit/receive information to/from another device through a network 76.

In this data processing device, operations of the respective elements, i.e., file information input units 11 and 21, file type discrimination units 12 and 22, file name acquisition units 13 and 23, file reference value calculation units 14 and 24, file block classification unit 15 and file block discrimination unit 25 in the first and second embodiments of the present invention can be realized in such a manner that CPU 71 operates in accordance with a program stored in ROM 72, RAM 73 and/or storage device 74. The program may be recorded on a recording medium which is attachable to/detachable from the data processing device. In addition, the program may be received from another device through network 76.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A data processing device comprising:
a file information creation unit (11) to create file information which is information regarding each file stored in a storage device, in correspondence with said file;
a discrimination unit (12) to discriminate a type of the file stored in said storage device;
a calculation unit (14) to calculate a file reference value which is a value uniquely determined by a file name stored in said storage device;
a file information storage unit (16) to include a plurality of storage regions for storing said file information; and
a classification information creation unit (15) to create region classification information which is information for classifying that each of said file information has to be stored in which storage region from among said plurality of storage regions in said file information storage unit, in accordance with the type of said file and said file reference value, wherein
said file information storage unit (16) stores said file information with the classification according to said region classification information.

2. The data processing device according to claim 1, wherein said classification information creation unit (15) classifies said storage region to be stored into different storage regions in accordance with said file reference value corresponding to each of said file information in such a manner that the number of said file information stored in one of said plurality of storage regions is a predetermined number or less.

3. The data processing device according to claim 2, wherein said classification information creation unit (15) classifies said storage region to be stored into different storage regions in accordance with a range of said file reference value corresponding to each of said file information.

4. The data processing device according to claim 1, wherein said file type is discriminated on the basis of an extension included in the file name of said file.

5. The data processing device according to claim 1, wherein said file reference value is calculated using a hush function.

6. The data processing device according to claim 1, wherein
said file information includes information about a storage place of the corresponding file, and
said file information storage unit (16) stores said file in an order corresponding to an order of storing said file information, and stores only a place where a beginning of said file is stored as said information about the storage place of said file.

7. The data processing device according to claim 6, wherein said file information storage unit (16) compresses said file to store the compressed file.

8. The data processing device according to claim 6, wherein said file information storage unit (16) encrypts said file to store the encrypted file.

9. The data processing device according to claim 1, wherein said file, said file information and said region classification information are coupled to each other and stored as one file in said storage region (160).

10. A data processing device comprising:
a file information storage unit (26) to record file information which is information regarding files stored on a storage device in a region corresponding to a type of each of said files and a file reference value which is a value uniquely determined from a file name;
a classification information storage unit (26) to store region classification information for classifying a region where said file information has to be stored in said file information storage unit (26), in accordance with the file type and said file reference value;
a file information creation unit (21) to create said file information about the file to be accessed;
a first discrimination unit (22) to discriminate a file type of said file to be accessed;
a calculation unit (24) to calculate said file reference value of said file to be accessed; and
a second discrimination unit (25) to refer to said region classification information on the basis of the file type and said file reference value of said file to be accessed, thereby discriminating a region, where the file information of said file is stored, in said file storage unit.

11. The data processing device according to claim 10, wherein
said file information storage unit (26) includes a plurality of storage regions, and records said file information on a storage region, which corresponds to a type of the file and a file reference value which is a value uniquely determined from a file name, among said plurality of storage regions,
in said region classification information, it is classified that said file information is stored in which storage region among said plurality of storage regions in said file information storage unit (26), in accordance with the file type and said file reference value, and
said second discrimination unit (25) refers to said region classification information on the basis of the file type and said file reference value of said file to be accessed, thereby discriminating a storage region which stores file information about said file to be accessed, in said file storage unit.

12. The data processing device according to claim 10, wherein said file type is discriminated on the basis of an extension included in the file name of said file.

13. The data processing device according to claim 10, wherein said file reference value is calculated using a hush function.

14. The data processing device according to claim 10, wherein
said file information includes information about a storage place of the corresponding file, and
said file information storage unit (26) stores said file in an order corresponding to an order of storing said file information, and stores only a place where a beginning of said file is stored as said information about the storage place of said file.

15. The data processing device according to claim 14, wherein said file information storage unit (26) compresses said file to store the compressed file.

16. The data processing device according to claim 14, wherein said file information storage unit (26) encrypts said file to store the encrypted file.

17. The data processing device according to claim 10, wherein said file, said file information and said region classification information are coupled to each other and stored as one file in said storage region (160).

18. A program for data processing, allowing a file information storage unit including a plurality of storage regions to store file information which is information regarding each file stored in a storage device, said program allowing a computer to execute the steps of:
discriminating a type of the file stored in said storage device;
calculating a file reference value which is a value uniquely determined from a file name stored in said storage device;
creating region classification information for classifying a storage region, where said file information has to be stored, among the plurality of storage regions in said file information storage unit, in accordance with the file type and said file reference value; and
storing said file information in the storage region according to said region classification information.

19. The program for data processing according to claim 18, wherein in the step of creating said region classification information, said computer is allowed to create said region classification information in such a manner that the number of said file information stored in each of said plurality of storage regions is a predetermined number or less.

20. A recording medium on which the program for data processing according to claim 18 is recorded.

21. A program for data processing, searching, in order to access each file stored in a storage device, in a file information storage unit recording file information which is information regarding the file on a region corresponding to a type of the file and a file reference value which is a value uniquely determined from a file name, said program allowing a computer to execute the steps of:
storing region classification information for classifying a region where said file information has to be stored in said file information storage unit, in accordance with the file type and said file reference value;
creating said file information about a file to be accessed;
discriminating a file type of said file to be accessed;
calculating a file reference value of said file to be accessed; and
referring to said region classification information on the basis of the file type and the file reference value of said file to be accessed, thereby discriminating a region, where the file information of the file is stored, in said file storage information unit.

22. The program for data processing according to claim 21, wherein
said file information storage unit includes a plurality of storage regions, and records said file information on a storage region, corresponding to a type of the file and a file reference value which is a value uniquely determined from the file name, among said plurality of storage regions,
in said region classification information, it is classified that said file information is stored which storage region among the plurality of storage regions in said file information storage unit, in accordance with the file type and said file reference value, and
in the step of discriminating a region in said file storage unit, said computer is allowed to refer to said region classification information on the basis of the file type and the file reference value of said file to be accessed, thereby discriminating a storage region, where the file information of said file to be accessed is stored, in said file storage unit.

23. A recording medium on which the program for data processing according to claim 21 is recorded.
